# EUROPEAN PATENT APPLICATION

(11) **EP 2 698 603 A2**
(43) Date of publication of application: **19.02.2014**
(21) Application number: 13460041.0
(22) Date of filing: 27.06.2013
(51) Int. Cl.: G01C 15/00, G02B 5/18

(54) **Measurement system for measuring transverse displacements of engineering structures and geodetic datum line determination**

(30) Priority: 12.08.2012 PL 40034012
(71) Applicant: Instytut Optyki Stosowanej, 03-805 Warszawa (PL)
(72) Inventor: B?Ocki, Narcyz Bogus?aw, 01-577 Warszawa (PL); Jaroszewicz, Zbigniew, 01-991 Warszawa (PL)
(74) Representative: Woznicki, Jerzy

(57) **Abstract**

The system includes a laser beam transmitter, a CCD array connected to a signal processing and analysing device, and a diffractive element with a variable focal length situated in the optical axis of the system between the transmitter and the CCD array. The diffractive element is composed of a pair of identical and parallel zone plates (P) rotationally mounted in respect to each other in the optical axis of the system. Each zone plate (P) has equally arranged elliptical zones situated around the plate centre, forming a wavefront focusing in the shape of a focal cross falling onto the CCD array. Another system comprises a spatial light modulator (SLM) situated on the laser beam path forming a diffractive element with a variable focal length in the form of a hyperbolic zone plate forming a wavefront focusing in the shape of a focal cross falling onto the CCD array.

## Description

The invention relates to a measurement system for measuring transverse displacements of engineering structures and geodetic datum line determination, particularly intended for geodetic measurements.

In geodesy, a base direction is a straight datum line in relation to which key structural elements are arranged. At present, a laser beam is used to determine a base direction. It is not easy to obtain laser beam propagation in the air along a straight line due to varying in time local inhomogeneities of the refractive index distribution. In addition, there are some problems related to the stability of a light beam transmitted by the laser caused by a change in the geometry of the resonator. The problems result mainly from temperature changes and natural divergence of the beam due to its diffraction. These factors significantly affect a straight line generation error, which can reach 2-3 mm over a distance of 300 m.

There are some known optical systems applied in geodetic measurements for determination of engineering structure displacements which use the three-point method. Two of these points are determined by a collimator coupled with a laser and CCD cameras. The third point is a diffractive element attached to the examined object and focusing the incident plane wave in the camera plane. A disadvantage of such systems is their susceptibility to a measurement error caused by the effect of subsoil deformations influenced by the temperature and modifications of the air refractive index compared to the direct use of a laser beam.

There are also some known systems which include a diffractive element with a variable focal length composed of two components in which the focal length changes as a function of the relative transverse displacement of both components. Lenses are typical components of diffractive elements with a variable focal length. Any modifications of the lens focal length are detected by light-sensitive elements of a CCD array linked to a signal processing and analysing device. A drawback of such systems is an increased size of the focal spot in the case of large measurement distances. During a reciprocal transverse displacement of both components, the transverse size of the system aperture, i.e. the area of coincidence of both components, decreases which results in a reduction of geodetic measurement accuracy.

There are also some known diffractive elements of a variable focal length composed of two parallel zone plates whose focal length changes as a function of their reciprocal rotation around the common optical axis. WO 2009012789 patent application presents a diffractive element with a variable focal length composed of a pair of zone plates which continuously change the optical properties. The element allows for obtainment of phase modulation of the light beam and the Moire effect similar to a system of lenses, axicon lens, phase modulator or spiral zone plates. Such an arrangement allows replacement of typical components of diffractive elements with a variable focal length.

Diffractive elements with a variable focal length may be as well obtained by way of modelling using a spatial light modulator (SLM). The device allows projection of optical elements in place of optical elements applied in various measurement devices. Diffractive elements displayed by a SLM modulator allow phase modulation of a light beam and obtainment of the Moire effect.

The intended purpose of the invention is to improve the accuracy of transverse displacement measurements and determination of a geodetic datum line in the measurement systems employing a laser beam and CCD array.

The measurement system for measuring transverse displacements of engineering structures and geodetic datum line determination, including a laser beam transmitter, a CCD array linked to a signal processing and analysing device and a diffractive element with a variable length situated in the optical axis of the system between the transmitter and the CCD array, according to the invention, is **characterised in that** the diffractive element of a variable focal length is composed of a pair of identical and parallel zone plates rotationally mounted in respect to each other in the optical axis of the system, whereas each zone plate has equally arranged elliptical zones situated around the plate centre, forming a wavefront focusing in the shape of a focal cross falling onto the CCD array.

It is advantageous if the zone plates have a binary phase profile. It is also advantageous if the mirror reflecting the wavefront towards the CCD array is situated between the CCD array and the pair of zone plates.

Another measurement system for measuring transverse displacements of engineering structures and geodetic datum line determination, including a laser beam transmitter, a CCD array connected to a signal processing and analysing device and a diffractive element with a variable focal length situated between the transmitter and the CCD array, according to the invention, is **characterised in that** is fitted with a spatial light modulator situated on the beam path, creating a diffractive element with a variable focal length in the form of a hyperbolic zone plate which forms a wavefront focusing in the shape of a focal cross falling onto the CCD array.

It is advantageous if the focusing diffractive component formed by the spatial light modulator has a binary phase profile resulting from the phase function of the pair of zone plates with elliptical zones. It is also advantageous if there is a mirror situated between the CCD array and the spatial light modulator.

As a result of reciprocal rotation, the employed pair of zone plates forms a system of Moire patterns in the form of a hyperbolic zone plate and a wavefront formed by the pair in the form of a focal cross falling onto the CCD array. The application of the formed focal cross for accurate measurement of its displacement as a consequence of a change of the optical axis direction resulting from the three-point method provides higher accuracy compared to the existing diffractive elements of a variable focal length. The same measuring system allows for determination of a datum line by an axial movement of the focal cross as a consequence of a continuous relative change of the angular displacement of both system components.

The system with a spatial light modulator enables projection of the hyperbolic zone plate which forms a wavefront focusing in the form of a focal cross falling on the CCD array. The application of the formed focal cross for accurate measurement of its displacement as a consequence of a change of the optical axis direction resulting from the three-point method provides higher accuracy compared to the existing diffractive elements of a variable focal length. The same measuring system allows for determination of a datum line by an axial movement of the focal cross as a consequence of a continuous change of the optical parameters of the modulated plate. The arrangement with a spatial light modulator is easier to use, but due to a small size of the aperture of typical spatial light modulators and, as a consequence, due to a large size of the focal spot, its range is limited to relatively small distances, usually less than 10 m.

The subject of the invention is shown as an example of a system on the drawings, where fig. 1 shows a measuring system with a pair of zone plates, fig. 2 shows a measuring system with a pair of zone plates and a mirror, fig. 3 shows a measuring system with a spatial light modulator, fig. 4 shows a measuring system with a spatial light modulator and a mirror, fig. 5 shows a hyperbolic zone plate formed after a light beam has passed the zone plates with elliptical zones, and fig. 6 shows a focal cross formed by a hyperbolic zone plate in the plane of the CCD array.

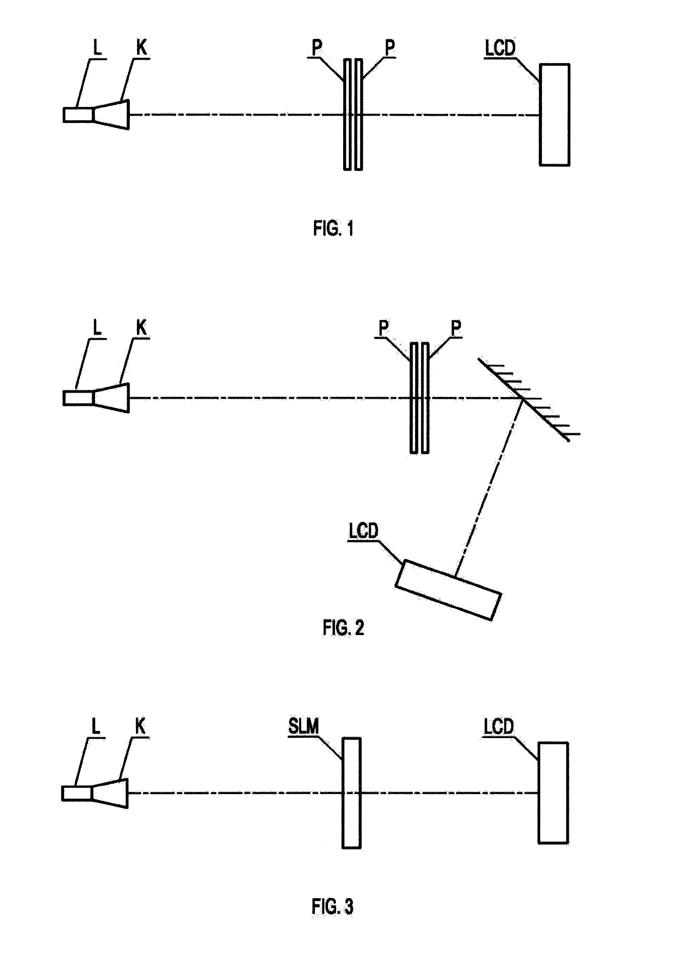

As shown in fig. 1, the measurement system for measuring transverse displacements of engineering structures and geodetic datum line determination comprises a laser beam transmitter, a CCD array connected to a signal processing and analysing device and a diffractive element with a variable focal length situated in the optical axis of the system between the laser beam transmitter and the CCD array. The laser beam transmitter comprises the laser L and the collimator K. The diffractive element with a variable focal length is composed of a pair of identical and parallel zone plates P rotationally mounted in respect to each other in the optical axis of the system. Each zone plate P has equally arranged elliptical zones situated around the plate centre, forming a wavefront in the shape of a focal cross falling on the CCD array. The zone plates P have a binary phase profile. It means that a half of each zone width is occupied by a transparent stage in the shape of the above mentioned zone and the other half is occupied by a diffractive stage which modifies the light phase. It can be a transparent stage of a rectangular cross-section and of the height which corresponds a half of the incident light wave length.

A difference between the system presented in fig. 2 and the system shown in fig. 1 is that the mirror Z which reflects the wavefront in the direction of the CCD array is situated between the CCD array and the pair of the zone plates P. The application of the mirror Z may result from the situation of terrain obstacles which make a measurement in a straight line impossible.

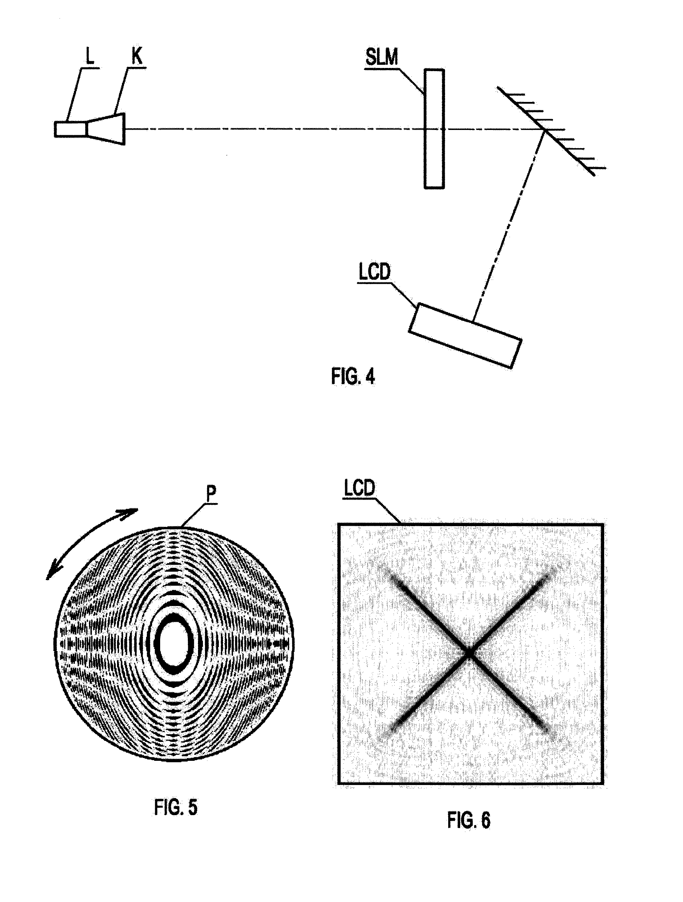

In the system presented in fig. 1, 2, a laser light beam of a circular cross-section is formed on the collimator K output. Having passed the pair of zone plates P, the beam forms a system of Moire patterns in the form of a hyperbolic zone plate which is presented in fig. 5 on the background of the zone plate P. The hyperbolic zone plate forms a focal cross falling onto the CCD array presented in fig. 6. The position of the focal cross centre in relation to the optical axis of the measurement system is dependent on the transverse displacement of both zone plates P in relation to the optical axis of the system going through the collimator K. The application of the transparent zone plates P with a binary phase profile allows light transmission with the final diffractive performance of 32 %. When the system was used to generate a datum line over a distance of up to 300 m, the measurement error was less than 1mm in moderate weather conditions, i.e. with no precipitation, strong winds or fog or even lower with no atmospheric turbulence resulting from temperature gradients.

Another system for transverse displacement measurements and geodetic datum line determination shown in fig. 3, also comprises a laser beam transmitter and a CCD array connected to a signal processing and analysing device. The laser beam transmitter comprises the laser L and the collimator K. The system is equipped with a spatial light modulator (SLM) situated on the beam path forming a diffractive element with a variable focal length in the form of a hyperbolic zone plate forming a wavefront in the shape of a focal cross falling onto the CCD array. The modulated diffractive element with a variable focal length is situated between the laser beam transmitter and the CCD array, as in the measurement system with a pair of zone plates P. The focal diffractive component formed by the spatial light modulator SLM has a binary phase profile resulting from the phase function of the zone plate P with elliptical zones. In this arrangement, the position of the focal cross centre in relation to the optical axis of the measurement system is dependent on the transverse displacement of the modulator in relation to the optical axis of the collimator K. The application of the spatial light modulator SLM in this system allows to obtain the diffractive performance of up to 100 %. Due to small dimensions of the element aperture and a necessity of maintaining a small cross dimension of the sections which form the focal cross, the measuring range of this system is limited to approximately 10 m.

A difference between the system presented in fig. 4 and the system presented in fig. 3 is the mirror Z which is placed between the CCD array and the hyperbolic zone plate modulated by the spatial light modulator SLM.

A signal processing and analysing device connected to an imaging camera performs the measurement strategy in accordance with an algorithm of digital processing of the standard image - the focal cross - falling onto the CCD array. The focal cross is formed by a hyperbolic zone plate made by a pair of zone plates P with elliptical zones. The cross arms are formed by two coupled diffractive numbers, i.e. one and minus one. The standard images should be sharp and well visible to be able to determine their centres with maximum accuracy and, consequently, to be able to determine the transverse displacement of the diffractive element in relation to an object or a datum straight line. Concerning the pair of zone plates P, the focal length changed by their rotation does not affect the aperture size. The program takes the standard image geometry into account and it is not sensitive to potential disturbances of the luminous intensity distribution. In order to compensate for the light wave power losses and eliminate the parasitic daylight, a laser with the frequency modulation function is applied and on the side of the receiver unit with a CCD array, the beam is demodulated by an image amplifier. A measurement with a hyperbolic zone plate displayed by a spatial light modulator SLM is similar, however, the wavefront is modified by a programme change of the phase function of the plate.

## Claims

1. The measurement system for measuring transverse displacements of engineering structures and geodetic datum line determination, including a laser beam transmitter, a CCD array linked to a signal processing and analysing device and a diffractive element with a variable length situated in the optical axis of the system between the transmitter and the CCD array, **characterized in that** the diffractive element of a variable focal length is composed of a pair of identical and parallel zone plates (P) rotationally mounted in respect to each other in the optical axis of the system, whereas each zone plate (P) has equally arranged elliptical zones situated around the plate centre, forming a wavefront focusing in the shape of a focal cross falling on the CCD array.

2. The system, according to claim 1, wherein the zone plates (P) have a binary phase profile.

3. The system, according to claim 1, wherein the mirror (Z) which reflects the wavefront in the direction of the CCD array is situated between the CCD array and the pair of the zone plates (P).

4. The measurement system for engineering structure transverse displacement measurements and geodetic datum line determination, including a laser beam transmitter, a CCD array connected to a signal processing and analysing device and a diffractive element with a variable focal length situated between the transmitter and the CCD array, **characterized in that** is fitted with a spatial light modulator (SLM) situated on the beam path, creating a diffractive element with a variable focal length in the form of a hyperbolic zone plate which forms a wavefront in the shape of a focal cross falling onto the CCD array.

5. The system, according to claim 1, wherein the focal diffractive component formed by the spatial light modulator (SLM) has a binary phase profile resulting from the phase function of the pair of zone plates with elliptical zones.

6. The system, according to claim 1, the mirror (Z) is placed between the CCD array and the spatial light modulator (SLM).
